# EUROPÄISCHE PATENTANMELDUNG

(11) **EP 2 617 612 A2**
(43) Veröffentlichungstag der Anmeldung: **24.07.2013**
(21) Anmeldenummer: 13150080.3
(22) Anmeldetag: 03.01.2013
(51) Int. Cl.: B60S 1/38, B29C 47/00

(54) **Wischerblatt mit erneuerbarer Wischkante**

(30) Priorität: 17.01.2012 DE 102012200628
(71) Anmelder: ROBERT BOSCH GMBH, 70442 Stuttgart (DE)
(72) Erfinder: Van De Rostyne, Kris, 3360 Opvelp (BE); Lay, Reiner, 52072 Aachen (DE); Weiler, Michael, 77815 Buehl (DE)

(57) **Zusammenfassung**

Die vorliegende Erfindung betrifft ein Wischgummi (10) für einen Scheibenwischer aus einem Elastomermaterial mit einem Basisabschnitt (12) und einem Lippenabschnitt (13), welcher eine Wischkante (14) umfasst. Um eine neue Wischkante durch einfaches Abreißen der alten Wischkante nach deren Abnutzung zu erzeugen, weist der Lippenabschnitt (13) oberhalb der Wischkante (14) eine Materialschwächung (15) entlang der Längsachse (16) des Wischgummis auf.

## Beschreibung

Die vorliegende Erfindung betrifft ein Wischerblatt für einen Scheibenwischer, insbesondere für ein Kraftfahrzeug, sowie ein Verfahren zur Herstellung eines solchen Wischerblatts.

### Stand der Technik

Wischgummiprofile für Wischblätter von Scheibenwischern werden üblicherweise aus Elastomermaterialien gefertigt. Durch die Verwendung der Elastomermaterialien können sich die Wischblätter einerseits an die Kontur einer Windschutzscheibe eines Kraftfahrzeuges anpassen und andererseits wird eine ausreichende Elastizität bei unterschiedlichen Temperaturanforderungen gewährleistet. Damit der Scheibenwischer in beide Bewegungsrichtungen zu guten Wischergebnissen führt, ist ein Wischgummi üblicherweise aus einem Basisabschnitt und einem Lippenabschnitt gefertigt, wobei der Basisabschnitt und der Lippenabschnitt so miteinander verbunden sind, dass der Lippenabschnitt in Abhängigkeit von der Wischrichtung des Scheibenwischers abknicken kann. Üblicherweise werden Basisabschnitt, Lippenabschnitt und das Gelenk zwischen Basisabschnitt und Lippenabschnitt einteilig aus dem Elastomermaterial zum Beispiel durch ein Extrusionsverfahren gefertigt.

Wischgummiprofile für Wischblätter von Scheibenwischern unterliegen einem anspruchsvollen mechanischen Anforderungsprofil. So müssen diese ein ausreichend gutes Wischbild auf einer zu reinigenden Oberfläche gewährleisten bei gleichzeitig möglichst geringer Geräuschentwicklung während des Wischvorgangs. Weiterhin müssen derartige Wischgummiprofile eine hohe Beständigkeit gegenüber Umwelteinflüssen wie insbesondere Ozon oder UV-Strahlung aufweisen.

Die Wischkante eines Wischgummis unterliegt besonderen Belastungen, da sie einerseits mechanisch in ständigem Kontakt mit der zu wischenden Fläche steht und durch die Bewegung Abnutzung erfährt. Andererseits können insbesondere Verschmutzungen und andere Erhebungen wie beispielsweise Insektenrückstände auf der zu wischenden Fläche oder auch ständige wechselnde Temperaturen und Umwelteinflüsse zu einer schnellen Alterung oder Verschlechterung der Wischkante führen.

Zur Erneuerung der Wischkante eines Wischgummis sind beispielsweise aus der DE 41 10 799 A1 und aus der DE 195 23 649 A1 ein Kantenschneider und eine Zuschnitteinrichtung bekannt, mit deren Hilfe eine abgenutzte Wischkante eines Wischgummis abgeschnitten werden kann. Diese Einrichtungen können nur so genutzt werden, dass das Wischgummi demontiert wird vom Scheibenwischer und in die Vorrichtungen fachgerecht eingespannt wird. Eine Benutzung durch Endverbraucher ist nicht vorgesehen.

### Offenbarung der Erfindung

Die vorliegende Erfindung betrifft ein Wischgummi für einen Scheibenwischer, welches aus einem Elastomermaterial ausgebildet ist und einen Basisabschnitt und einen Lippenabschnitt aufweist, wobei der Lippenabschnitt eine Wischkante umfasst. Erfindungsgemäß weist der Lippenabschnitt oberhalb der Wischkante eine Materialschwächung entlang der Längsachse des Wischgummis auf.

Dadurch kann eine neue Wischkante erzeugt werden, beispielsweise durch einfaches Abreißen der alten Wischkante nach deren Abnutzung oder mit Hilfe von einfachsten haushaltsüblichen Hilfsmitteln. Dies ist auch für den Endverbraucher möglich und bedarf keiner Werkzeuge und keiner Demontage des Wischerblatts. Außerdem kann auf diese Weise auch eine spezielle erste Wischkante beispielsweise für den Sommer und eine danach erzeugbare spezielle Wischkante beispielsweise für den Winter vorgesehen werden, oder umgekehrt die erste Wischkante mit Winter-Eigenschaften und die neu erzeugbare zweite Wischkante mit Sommer-Eigenschaften. Insgesamt kann so vorteilhafterweise ein Wischgummi für Wischblätter von Scheibenwischern bereitgestellt werden, welches bei allen Betriebsbedingungen eine deutlich verbesserte Wischqualität und eine erhöhte Lebensdauer aufweisen kann.

In einer Ausführungsform der vorliegenden Erfindung ist die Materialschwächung derart ausgeführt, dass die Wischkante durch Reißen entlang der Materialschwächung vom Wischgummi unter Ausbildung einer neuen Wischkante abtrennbar ist.

Wie vorstehend ausgeführt ist dies vorteilhafterweise auch für den Endverbraucher möglich und bedarf keiner Werkzeuge und keiner Demontage des Wischerblatts. Auf diese Weise kann zudem eine spezielle erste Wischkante beispielsweise für den Sommer und eine danach erzeugbare spezielle Wischkante beispielsweise für den Winter vorgesehen werden, oder umgekehrt die erste Wischkante mit Winter-Eigenschaften und die neu erzeugbare zweite Wischkante mit Sommer-Eigenschaften. Winter- und Sommer-Eigenschaften können zum Beispiel hinsichtlich der Härte des Elastomermaterials unterschiedlich sein, so dass die Elastomermischung für den Sommer eine größere Härte aufweist und daher bei höheren Temperaturen um etwa 20 °C eine optimale Härte und Elastizität entwickelt, wohingegen die Elastomermischung für den Winter eine vergleichsweise geringere Härte und höhere Kälteflexibilität aufweist und daher beispielsweise bei niedrigeren Temperaturen von ca. 5 °C optimale Werte erzielt.

In einer weiteren Ausführungsform der vorliegenden Erfindung ist die Materialschwächung einseitig oder zweiseitig ausgeführt und ist eine Einschneidung, eine punkt- oder schlitzförmige Perforation oder eine Einkerbung.

Bevorzugt wird die Materialschwächung zweiseitig, das heißt symmetrisch zur Längsachse des Lippenabschnitts des Wischgummis, eingebracht. Hierdurch kann eine gute mechanische Belastbarkeit und damit gute Wischeigenschaften auch bei den vielen Kippvorgängen der Wischbewegung erreicht werden.

Die Form der Materialschwächung kann frei gewählt werden. Es sollte sowohl bei dem Vorsehen eines Schlitzes oder einer Perforation oder einer Einkerbung sicher gestellt werden, dass nach einer gewissen Einsatzzeit, in der die erste Wischkante eine Abnutzung erfährt, dass der untere Lippenabschnitt entlang der Materialschwächung entfernt werden kann, um eine neue Wischkante zu erzeugen. Dabei sollte das Entfernen bevorzugt ohne Werkzeuge und ohne Demontage des Wischgummis von einem Endverbraucher, maximal unter Zuhilfenahme von haushaltsüblichen Hilfsmitteln, durchführbar sein.

In einer weiteren Ausführungsform der vorliegenden Erfindung beträgt die verbleibende Dicke des Lippenabschnitts im Bereich der Materialschwächung zwischen ≥ 300 µm und ≤ 800 µm, insbesondere zwischen ≥ 500 µm und ≤ 600 µm.

Die verbleibende Dicke des Lippenabschnitts im Bereich der Materialschwächung sollte einerseits nicht zu groß ausgeführt sein, um die Erzeugung einer neuen Wischkante nicht zu beeinträchtigen. Außerdem sollte die hierdurch ebenfalls mitdefinierte Breite der neuen Wischkante so gewählt werden, dass weiterhin optimale Wischeigenschaften erzielt werden.

Andererseits sollte die verbleibende Dicke des Lippenabschnitts im Bereich der Materialschwächung nicht zu klein ausgeführt sein, um eine ausreichende mechanische Stabilität des Wischvorgangs des Wischgummis in der Ausgangskonfiguration mit der ursprünglichen Wischkante sicher zu stellen.

In einer weiteren Ausführungsform sind der Basisabschnitt und der Lippenabschnitt des Wischgummis aus unterschiedlichem Material gefertigt.

Um eine ausreichende Elastizität bei unterschiedlichen Temperaturanforderungen zu gewährleisten, wird das Wischgummi aus einem Elastomermaterial gefertigt. Als Elastomermaterialien zur Herstellung des Wischgummis eignen sich zum Beispiel Naturkautschuk (NR), Chloropren-Kautschuk (CR), Butadien-Kautschuk (BR), Styrol-Butadien-Kautschuk (SBR), Ethylen-Propylen-Copolymere (EPM), Ethylen-Propylen-Dien-Terpolymere (EPDM), Ethylen-Vinylacetat-Copolymere (EVM), chloriertes Polyethylen (CM), chlorsulfoniertes Polyethylen (CSM), Acrylnitril-Butadien-Kautschuk (NBR), hydrierter Acrylnitril-Butadien-Kautschuk (HNBR), Fluorkautschuk (FPM), Polyurethan-Elastomer (PUR), Mischungen aus Acrylnitril-Butadien-Kautschuk und Polyvinylchlorid (NBR/PVC), Silikonkautschuk sowie Mischungen aus diesen Materialien.

Besonders bevorzugt ist das Elastomermaterial ausgewählt aus der Gruppe bestehend aus Ethylen-Propylen-Dien-Terpolymere, Naturkautschuk, Chloropren-Kautschuk, Silikonkautschuk oder einer Mischung daraus. Besonders bevorzugt wird gemäß dieser Ausführungsform Ethylen-Propylen-Dien-Terpolymer für den Basisabschnitt eingesetzt. Als Material für den Lippenabschnitt werden vorzugsweise Elastomermaterialien mit einer hohen Verschleißfestigkeit verwendet. Besonders bevorzugt als Material für den Lippenabschnitt ist gemäß dieser Ausführungsform Naturkautschuk, Polychloropren und EP(D)M.

Um zu vermeiden, dass das Wischerblatt auf einer zu wischenden Scheibe im Betrieb rattert, ist es weiterhin möglich und ratsam, den Lippenabschnitt oder zumindest die Wischkante des Lippenabschnitts mit einer Beschichtung zu versehen, die beispielsweise Trockenschmierstoffpartikel enthält. Durch die Auswahl einer geeigneten Beschichtung lässt sich so auch ein schlierenfreies Wischergebnis erzielen und der Verschleiß des Wischgummis minimieren. Geeignete Beschichtungen sind insbesondere solche, die beispielsweise Feststoffpartikel als reibungsverminderte Zusätze enthalten. Derartige Feststoffpartikel sind z. B. Partikel aus Polytetrafluorethylen, Polyethylen oder Graphitpartikel. Geeignete Beschichtungen, die entsprechende reibungsverminderte Zusätze enthalten sind dem Fachmann bekannt.

In einer weiteren Ausführungsform beträgt die Breite der neuen Wischkante zwischen ≥ 500 µm und ≤ 800 µm, insbesondere zwischen ≥ 500 µm und ≤ 600 µm.

Hierdurch kann eine gute Wischleistung bei geringer Geräuschentwicklung auch für die neu geschaffene Wischkante sicher gestellt werden. Auch das Gleitverhalten des Wischgummis bei der Bewegung auf der Scheibe, welches insbesondere ohne Springen und Rattern erfolgen soll, wird hierdurch gewährleistet. Unterstützend kann der Lippenabschnitt auch im Bereich der neuen Wischkante eine Beschichtung aufweisen, die die Gleiteigenschaften der neuen Wischkante verbessert. Derartige Beschichtungen sind dem Fachmann bekannt und weiter vorne beschrieben.

Hinsichtlich weiterer Merkmale und Vorteile des erfindungsgemäßen Wischgummis wird hiermit explizit auf die Erläuterungen im Zusammenhang mit dem später erläuterten, erfindungsgemäßen Verfahren, dem später erläuterten, erfindungsgemäßen Wischerblatt, der später erläuterten, erfindungsgemäßen Verwendung sowie auf die Figur und die Figurbeschreibung verwiesen.

Ein weiterer Gegenstand der vorliegenden Erfindung betrifft ein Verfahren zur Herstellung eines Wischgummis umfassend die Schritte:
- Extrudieren eines Profilstrangs aus einem Elastomermaterial, umfassend einen Basisabschnitt und einen Lippenabschnitt, welcher die Wischkante eines resultierenden Wischgummis umfasst,
- Vulkanisieren der Elastomermaterials,
- Einbringen einer Materialschwächung in den Lippenabschnitt oberhalb der Wischkante entlang der Längsachse des resultierenden Wischgummis, und gegebenenfalls
- Teilen des Profilstrangs, so dass zwei Wischgummis erhalten werden.

Das erfindungsgemäße Wischgummi kann beispielsweise durch Extrusion des Elastomermaterials hergestellt werden. Nach der Extrusion wird das Elastomermaterial zum Wischgummi vulkanisiert. Die für die Vulkanisation erforderliche Wärmebehandlung kann zum Beispiel durchgeführt werden, indem der bei der Extrusion hergestellte Profilstrang, welcher entweder ein Einzelstrang oder ein Doppelstrang sein kann, der später noch in zwei Wischgummis getrennt wird, durch Wärmebehandlung zum Beispiel in einem Salzbad vulkanisiert wird.

Das erfindungsgemäße Wischgummi kann aber auch durch Spritzguss oder Pressverfahren hergestellt werden.

Das Einbringen der Materialschwächung kann beispielsweise durch Materialausnehmung oder Materialverdrängung oder Einschneiden erfolgen.

Meist wird es alternativ zur Materialausnehmung bevorzugt, wenn die Materialschwächung, vorzugsweise ausschließlich, durch eine Verdrängung von Material des Lippenabschnitts gebildet ist. Eine derartige Materialverdrängung kann beispielsweise durch einen, vorzugsweise linienförmigen, Schnitt (Schlitzung), etwa vermittels einer Klinge, oder/und durch Punktuation (Perforation) des Materials, etwa durch einen Laser, eine Nadel oder dergleichen, oder/und durch Prägung erfolgen.

Das Einbringen der Materialschwächung kann entweder direkt bei der Extrusion, dem Spritzguss oder dem Pressen des Profilstrangs oder nachher erfolgen. Beispielsweise kann dieser Verfahrensschritt vor, gleichzeitig oder auch nach dem Verfahrensschritt der Teilung eines Profildoppelstranges erfolgen.

In einer Ausgestaltung des erfindungsgemäßen Verfahrens wird die Materialschwächung einseitig oder zweiseitig als Schlitz oder als Perforation mit einem Schneid- oder Stanzwerkzeug eingebracht.

Bevorzugt wird die Materialschwächung zweiseitig, das heißt symmetrisch zur Längsachse des Lippenabschnitts des Wischgummis, eingebracht. Hierdurch kann eine gute mechanische Belastbarkeit und damit gute Wischeigenschaften auch bei den vielen Kippvorgängen der Wischbewegung erreicht werden.

Die Form der Materialschwächung kann frei gewählt werden. Es sollte sowohl bei dem Vorsehen eines Schlitzes oder einer Perforation oder einer Einkerbung sicher gestellt werden, dass nach einer gewissen Einsatzzeit, in der die erste Wischkante eine Abnutzung erfährt, dass der untere Lippenabschnitt entlang der Materialschwächung entfernt werden kann, um eine neue Wischkante zu erzeugen. Dabei sollte das Entfernen bevorzugt ohne Werkzeuge und ohne Demontage des Wischgummis von einem Endverbraucher, maximal unter Zuhilfenahme von haushaltsüblichen Hilfsmitteln, durchführbar sein.

In einer weiteren Ausgestaltung des erfindungsgemäßen Verfahrens wird die Materialschwächung simultan in einem Schritt mit dem Trennen des Profilstrangs ausgeführt.

Hierdurch kann vorteilhafterweise in einem Schritt sowohl die Materialschwächung als auch die Trennung des Doppelprofilstrangs vorgenommen und qualitätsüberwacht werden. Der Umbau der herkömmlich eingesetzten Maschinen für das Trennen des Doppelstrangs zum zusätzlichen Einbringen der Materialschwächung ist leicht und ohne großen Aufwand möglich.

Hinsichtlich weiterer Merkmale und Vorteile des erfindungsgemäßen Verfahrens wird hiermit explizit auf die Erläuterungen im Zusammenhang mit dem erfindungsgemäßen Wischgummi, dem später erläuterten, erfindungsgemäßen Wischerblatt, der später erläuterten, erfindungsgemäßen Verwendung sowie auf die Figur und die Figurbeschreibung verwiesen.

Die Erfindung betrifft weiterhin ein Wischerblatt, insbesondere für einen Scheibenwischer eines (Kraft-)Fahrzeugs, welches ein erfindungsgemäßes Wischgummi umfasst.

Hinsichtlich weiterer Merkmale und Vorteile des erfindungsgemäßen Wischerblatts wird hiermit explizit auf die Erläuterungen im Zusammenhang mit dem erfindungsgemäßen Wischgummi, dem erfindungsgemäßen Verfahren, der später erläuterten, erfindungsgemäßen Verwendung sowie auf die Figur und die Figurbeschreibung verwiesen.

Die Erfindung betrifft ferner die Verwendung eines erfindungsgemäßen Wischgummis in einem Wischerblatt, insbesondere für einen Scheibenwischer eines (Kraft-)Fahrzeugs.

Hinsichtlich weiterer Merkmale und Vorteile der erfindungsgemäßen Verwendung wird hiermit explizit auf die Erläuterungen im Zusammenhang mit dem erfindungsgemäßen Wischgummi, dem erfindungsgemäßen Verfahren, dem erfindungsgemäßen Wischerblatt sowie auf die Figur und die Figurbeschreibung verwiesen.

### Zeichnung

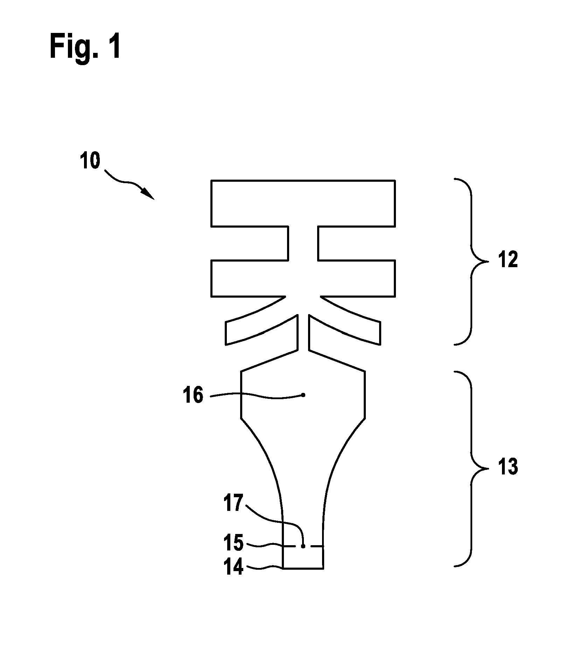

Weitere Vorteile und vorteilhafte Ausgestaltungen der erfindungsgemäßen Gegenstände werden durch die Zeichnung veranschaulicht und in der nachfolgenden Beschreibung erläutert. Dabei ist zu beachten, dass die Zeichnung nur beschreibenden Charakter hat und nicht dazu gedacht ist, die Erfindung in irgendeiner Form einzuschränken. Es zeigt
- Fig. 1: eine schematische Querschnittsansicht eines erfindungsgemäßen Wischgummis.

In Figur 1 wird in einer schematischen Querschnittsansicht ein erfindungsgemä-βes Wischgummi 10 gezeigt. Das Wischgummi 10 ist aus einem Elastomermaterial und weist einen Basisabschnitt 12 und einen Lippenabschnitt 13 auf. Der Lippenabschnitt 13 umfasst die Wischkante 14. Erfindungsgemäß weist der Lippenabschnitt 13 oberhalb der Wischkante 14 eine Materialschwächung 15 auf. Die Materialschwächung 15 verläuft entlang der Längsachse 16 des Wischgummis 10. In der gezeigten Ausführungsform ist die Materialschwächung 15 beidseitig als Schlitz ausgeführt. Die Materialschwächung kann gleichermaßen einseitig ausgeführt werden. In ihrer Form kann sie auch als punkt-oder schlitzförmige Perforation oder als Einkerbung ausgeführt werden. In der vorliegenden Ausführungsform ist die Materialschwächung 15 derart ausgeführt, dass die Wischkante 14 durch Reißen entlang der Materialschwächung 15 vom Wischgummi 10 abgetrennt werden kann unter Ausbildung einer neuen Wischkante 17. Dies kann auch vom Endverbraucher ohne Demontage des Wischblatts, welches das Wischgummi 10 enthält, vorgenommen werden.

Die verbleibende Dicke des Lippenabschnitts 13 im Bereich der Materialschwächung 15 beträgt zwischen ≥ 300 µm und ≤ 800 µm und die Breite der neuen Wischkante 17 beträgt zwischen ≥ 500 µm und ≤ 800 µm.

## Patentansprüche

1. Wischgummi (10) für einen Scheibenwischer, aus einem Elastomermaterial mit
- einem Basisabschnitt (12) und
- einem Lippenabschnitt (13), welcher eine Wischkante (14) umfasst, wobei der Lippenabschnitt (13) oberhalb der Wischkante (14) eine Materialschwächung (15) entlang der Längsachse (16) des Wischgummis aufweist.

2. Wischgummi nach Anspruch 1, wobei die Materialschwächung (15) derart ausgeführt ist, dass die Wischkante (14) durch Reißen entlang der Materialschwächung (15) vom Wischgummi (10) unter Ausbildung einer neuen Wischkante (17) abtrennbar ist.

3. Wischgummi nach Anspruch 1 oder 2, wobei die Materialschwächung (15) einseitig oder zweiseitig ausgeführt ist und eine Einschneidung, eine punkt-oder schlitzförmige Perforation oder eine Einkerbung ist.

4. Wischgummi nach Anspruch 1, 2 oder 3, wobei die verbleibende Dicke des Lippenabschnitts (13) im Bereich der Materialschwächung zwischen ≥ 300 µm und ≤ 800 µm beträgt.

5. Wischgummi nach einem der Ansprüche 1 bis 4, wobei der Basisabschnitt (12) und der Lippenabschnitt (13) des Wischgummis (10) aus unterschiedlichem Material gefertigt sind.

6. Wischgummi nach einem der Ansprüche 1 bis 5, wobei die Breite der neuen Wischkante (17) zwischen ≥ 500 µm und ≤ 800 µm beträgt.

7. Verfahren zur Herstellung eines Wischgummis (10) umfassend die Schritte:
- Extrudieren eines Profilstrangs (18) aus einem Elastomermaterial, umfassend einen Basisabschnitt (12) und einen Lippenabschnitt (13), welcher die Wischkante (14) eines resultierenden Wischgummis (10) umfasst,
- Vulkanisieren des Elastomermaterials,
- Einbringen einer Materialschwächung (15) in den Lippenabschnitt (13) oberhalb der Wischkante (14) entlang der Längsachse (16) des resultierenden Wischgummis, und gegebenenfalls
- Teilen des Profilstrangs (18), so dass zwei Wischgummis (10) erhalten werden.

8. Verfahren nach Anspruch 7, wobei die Materialschwächung (15) einseitig oder zweiseitig als Schlitz oder als Perforation mit einem Schneid- oder Stanzwerkzeug eingebracht wird.

9. Verfahren nach Anspruch 7 oder 8, wobei die Materialschwächung (15) simultan in einem Schritt mit dem Trennen des Profilstrangs ausgeführt wird.

10. Wischerblatt, insbesondere für einen Scheibenwischer eines Fahrzeugs, umfassend ein Wischgummi (10) nach einem der Ansprüche 1 bis 6.

11. Verwendung eines Wischgummis (10) nach einem der Ansprüche 1 bis 6 in einem Wischerblatt, insbesondere für einen Scheibenwischer eines Fahrzeugs.
